# EUROPEAN PATENT APPLICATION

(11) **EP 2 030 950 A1**
(43) Date of publication of application: **04.03.2009**
(21) Application number: 07743641.8
(22) Date of filing: 18.05.2007
(51) Int. Cl.: C01F 7/02, B01J 21/04

(54) **PARTICULATE ALUMINA COMPOSITION AND PROCESS FOR PRODUCTION THEREOF**

(30) Priority: 19.05.2006 JP 2006140735
(71) Applicant: Sato Research Co. Ltd., Kitakyushu-shi, Fukuoka 808-0112 (JP)
(72) Inventor: SATO, Goro, Kitakyushu-shi, Fukuoka 808-0112 (JP); SATO, Masayoshi, Kitakyushu-shi, Fukuoka 808-0137 (JP)
(74) Representative: Calamita, Roberto
(86) International application number: PCT/JP2007/060206
(87) International publication number: WO 2007/135977

(57) **Abstract**

A method for producing a particulate alumina composition according to the present invention is to prepare a wet particulate in a gas-liquid-solid three-phase containing air by adding water and/or one or more compounds selected from an inorganic compound and an oxygen-containing organic compound to one or more alumina sources selected from an alumina hydrate and an alumina being rehydratable in the temperature range of 70 to 250°C, and to carry out a hydrothermal reaction in a temperature range of 70°C to 250°C by raising temperature by heat-pipe phenomenon under reduced pressure as necessary.

In the present invention, filtration and washing are carried out after the particulate alumina composition is preliminarily brought into contact with an alkaline component when an acid component is removed from the particulate alumina composition.

An particulate alumina composition according to the present invention has a specific surface area in a dried product at 200°C in the range of 40 to 300 m²/g and contains crystalline boehmite having an aspect ratio of 10 or less.

## Description

### [TECHNICAL FIELD]

The present invention relates to a method for producing a particulate alumina composition and a particulate alumina composition obtained by the method. More specifically, the present invention relates to an alumina composition useful for various catalyst carriers, ceramic products, filtration materials, materials for integrated circuit, abrasive compounds, recording layers of ink jet, nanocomposites or the like, and a novel method for producing the same.

### [BACKGROUND ART]

As a method for producing ultrafine particulate alumina, a method of hydrolyzing aluminum salts or aluminum alkoxides, or a method of synthesizing from aluminum metal, and the like are conventionally known. Moreover, alumina compositions modified with metal oxides and the like are produced by various methods. However, in these conventional methods, a large amount of by-product wastes is generated. In addition, in the conventional methods, in which condensation process is required because an alumina concentration during preparation is a low concentration of about several percents, as a result, the conventional methods require high energy consumption.

Japanese Patent Application Publication No. S59-13446 (Patent Document 1) has disclosed a method for producing an alumina suspension by hydrothermally treating in the presence of acid ρ-alumina that is obtained by dehydrating under rapid heating of aluminum hydroxide in thermal air current. However, an alumina sol obtained by this method is in the form of bunch and not monodisperse in a dispersion medium, therefore alumina obtained from this dispersion has difficulty in control of pore structure. In addition, an alumina concentration obtained by this method is a low concentration of 2 to 10 wt%.

Japanese Patent Laid-Open Publication No. 2000-176288 (Patent Document 2) has described to obtain rehydrated alumina by suspending in hot water at 90°C in the presence of citric acid alumina that is obtained by dehydrating under rapid heating in thermal air current. An alumina concentration obtained by this reaction is assumed in approximately 35 wt%, and there is no description with respect to the quality of the obtained alumina.

The inventors of the present invention have provisionally invented a method for producing an alumina sol monodispersed with fibrous alumina particles, and have found that the alumina obtained from this alumina sol is useful for catalyst carriers (International Publication No. WO 1997-32817, Patent Document 3). In addition, the inventors of the present invention have found that the addition of an oxygen-containing organic compound as a pore-structure controlling agent during the preparation of an alumina sol is useful in order to increase a specific surface area of alumina (International Publication No. WO 2001-056951, Patent Document 4). However, although grade alumina is obtained by these methods, it requires considerable time to raise the temperature at the hydrothermal treatment, further, the viscosity of reactant is increased during the temperature rising, and the rate of heat transfer is decreased. Moreover, in these methods, there are problems such that a reaction product is difficult to handle when taken out from a reaction vessel since the reaction product becomes solid soap-like substance in the case that alumina concentration is high, and the like. Furthermore, short fibrous alumina particles having small aspect ratio are not obtained.

An alumina composition obtained by the method contains acids, and these acids may need to be eliminated depending on application. Although a general method is that an alumina composition containing acids is brought into contact with water to from an aqueous alumina sol, and then the sol is filtered and washed with water as an aqueous alumina gel by adding alkaline components, there were problems in that the alumina particles passing through pores of a filter fabric; viscosity is high; and filtration resistance increases.

Moreover, in the method of the publication using alumina obtained by dehydrating under rapid heating in thermal air current, alumina having low aspect ratio was not obtained. Patent Document 1: Japanese Patent Application Publication No. S59-13446
Patent Document 2: Japanese Patent Laid-Open Publication No. 2000-176288
Patent Document 3: International Publication No. WO 1997-32817
Patent Document 4: International Publication No. WO 2001-056951

### [DISCLOSURE OF THE INVENTION]

### [PROBLEMS TO BE SOLVED BY THE INVENTION]

However, although a high-grade alumina is obtained by these methods, it requires considerable time to rise the temperature at the hydrothermal treatment, further, the alumina preparation is thickened during the temperature rising, and the rate of heat transfer is decreased. Moreover, in these methods, there are problems such that a reaction product is difficult to handle when taken out from a reaction vessel since the reaction product becomes solid soap-like substance in the case that alumina concentration is high, and the like. Furthermore, short fibrous alumina particles having small aspect ratio are not obtained.

An alumina composition obtained by the method contains acids, and these acids may need to be eliminated depending on application. Although a general method is that an alumina composition containing acids is brought into contact with water to form an aqueous alumina sol, and then the sol is filtered and washed with water as an aqueous alumina gel by adding alkaline components, there were problems in that the alumina particles passing through pores of a filter fabric; viscosity is high; and filtration resistance increases.

Moreover, in the method of the publication using alumina obtained by dehydrating under rapid heating in thermal air current, alumina having low aspect ratio was not obtained.

### [MEANS TO SOLVE THE PROBLEMS]

The present invention relates to a method for producing an alumina composition, in which water and/or an aqueous solution of an inorganic compound and an oxygen-containing organic compound is mixed to a solid mainly containing alumina powders such as alumina hydrate and the like to prepare wet particulate in a gas-liquid-solid three-phase state containing air, the wet particulate are filled up into a reaction vessel, and a hydrothermal reaction is carried out to ensure an increase of the heat transfer rate and uniformity of the temperature; and further the alumina composition has an excellent flow property. In addition, the present invention relates to an alumina composition having small aspect ratio which was not obtained by the methods of the publications.

In other words, a method for producing a particulate alumina composition according to the present invention is characterized by preparing a wet particulate in a gas-liquid-solid three-phase containing air by adding water and/or one or more compounds selected from an inorganic compound and an oxygen-containing organic compound to one or more alumina sources selected from an alumina hydrate and an alumina being rehydratable in the temperature range of 70 to 250°C, and carrying out a hydrothermal reaction in a temperature range of 70°C to 250°C by raising temperature by heat-pipe phenomenon under reduced pressure as necessary.

Moreover, the present invention is characterized by carrying out filtration and washing after the particulate alumina composition is preliminarily brought into contact with an alkaline component when an acid component is removed from the particulate alumina composition.

An alumina composition according to the present invention is characterized by being produced by any one of the methods, further having a specific surface area in a dried product at 200°C in the range of 40 to 300 m²/g, and containing crystalline boehmite having an aspect ratio of 10 or less.

### [EFFECT OF THE INVENTION]

According to a method of the present invention, water, an inorganic compound or an oxygen-containing organic compound is added to a alumina source to mix, a wet particulate in a gas-liquid-solid three-phase state is prepared in which solid mainly containing alumina powders, liquid and gas are commingled, and then the mixture is filled up in a reaction vessel to carry out a hydrothermal reaction. As a result, when the reaction vessel is heated from outside, the center portion in the reaction vessel is also heated rapidly and temperature of the reactant becomes uniform. That is, the heat transfer rate of the reactant is increased by a heat transfer based on heat pipe phenomenon that is one of the heat exchangers, and the reacract became rapidly heated and the reaction temperature became uniformized. Moreover, after wet particulates were filled up into the reaction vessel, when the reaction vessel was heated from outside after removing air in the vessel to reduce pressure, the heat transfer rate further increased, and temperature rising rate became extremely rapid and uniformity of the reaction temperature was further retained, as a result, the quality of an obtained product was improved.

A product obtained from a conventional reaction in solid-liquid two-phase was grease-like or solid soap-like substances, therefore retrieval from the reaction vessel and handling such as transportation, storage and the like were difficult. In contrast, a particulate alumina composition obtained by a method according to the present invention is particulates being dried and having excellent flowability, and handling properties, for example, enabling to transport by a pneumatic conveyer, and the like, were improved.

In addition, when acids in an acid-containing alumina composition obtained by a method according to the present invention were removed by washing, filtration and washing became easy by bringing a particulate alumina composition into direct contact with an alkaline component.

An alumina sol obtained by dispersing a particulate alumina composition obtained by a method according to the present invention into water has a low viscosity and a small aspect ratio. Moreover, a short fibrous alumina sol or gel having a small aspect ratio is obtained even under reaction conditions in neutral region or basic region. A small aspect ratio provides high densification when drying, and high binder function.

According to a method of the present invention, both of a alumina source and an alumina product have a high alumina concentration, heat of hydration in the hydration of alumina source may_be used, and used amount of utilities at the reaction may be drastically reduced as compared with a production method in low concentration conventionally used.

### [BRIEF DESCRIPTION OF THE DRAWINGS]

Fig. 1 shows a pore size-diameter distribution of a reaction product obtained in Example 2.
Fig. 2 shows a pore size-diameter distribution of an aqueous sol acidified with acetic acid in which a reaction product obtained in Example 2 is dispersed in water.
Fig. 3 shows a pore size-diameter distribution of an aqueous gel after neutralizing and washing an aqueous sol in Example 2.
Fig. 4 shows a pore size-diameter distribution of an aqueous sol acidified with hydrochloric acid after neutralizing and washing in Example 2.

### [BEST MODE FOR CARRYING OUT THE INVENTION]

The present invention will be described bellow.

### (Method for producing particulate alumina composition)

### (1) Alumina source

For a alumina source used in the present invention, an alumina hydrate which may be converted to boehmite in the temperature range of 70 to 250°C and an alumina which may be rehydrated in the same temperature range are included. As an alumina hydrate, an alumina gel, pseudo-boehmite and bayerite are included. As an alumna which may be rehydrated, an alumina having crystalline structure of ρ-alumina and χ-alumina obtained by rapid heating and dehydrating aluminum hydroxide, and the like are used. In the present invention, these alumina sources are also used by mixing them. In addition, gibbsite and the like are also used by mixing with the alumina source.

### (2) Additives at preparation

In the present invention, water is added or one or more compounds selected from an inorganic compound and an oxygen-containing organic compound are added to the powdery alumina source.

The inorganic compound includes a monobasic acid or a polyvalent inorganic acid, ammonium and metal compound such as soluble metal salts, a metal oxide, a metal hydroxide, a metal alkoxide and the like.

The oxygen-containing organic compound includes an aliphatic monocarboxylic acid such as acetic acid and the like, polyvalent carboxylic acid such as an oxalic acid and the like, a hydroxycarboxylic acid such as a glycolic acid, a malic acid, a lactic acid, a citric acid and the like, polyvalent alcohol such as glycerin and the like, sucrose, or others.

In the present invention, when an alumina composition forming an alumina sol that is easily dispersed in water is obtained, a monobasic acid such as a nitric acid and a hydrochloric acid as an inorganic compound, and an aliphatic monocarboxylic acid such as a formic acid, an acetic acid and the like as an oxygen-containing organic material are useful. In the present invention, usually these acids are added to a alumina source as an aqueous solution.

The amount of these compounds is used, for an inorganic acid, in the range of 0.05 to 0.25 mol, and preferably 0.08 to 0.15 mol relative to one mol of alumina; and for an aliphatic monocarboxylic acid only and an aliphatic monocarboxylic acid used in combination with an inorganic acid, in the range of 0.05 to 0.75 mol, and preferably 0.08 to 0.50 mol relative to one mol of alumina.

An oxygen-containing organic compound such as a glycolic acid, an oxalic acid, a gluconic acid, a malic acid, a citric acid, glycerin, and the like is useful for increasing specific surface area and pore volume of an alumina composition to be obtained. The amount of these compounds is effective in the range of 0.1 to 10 wt%, preferably 0.2 to 5 wt% relative to the alumina, and specific surface area and pore volume are maximized in this range.

A pH region at a hydrothermal reaction in the present invention may be in any of a weakly acidic region, a neutral region or a basic region. That is, a reaction can be conducted in a weakly acidic region obtained by adding the nitric acid, the acetic acid and the like; in a neutral region obtained by water only; or in a basic region obtained by adding ammonia and the like. As describes below, properties obtained when the alumina composition is dispersed into water are different depending on these pH conditions.

Even when an inorganic compound is a metal oxide or metal hydroxide and the like having low solubility, the solubility becomes high under hydrothermal reaction conditions, copolymerization with the coexisting alumina source may be conducted, and an alumina composition composed of various alumina copolymers is obtained. When an inorganic compound is a polyvalent inorganic acid or a salt thereof, a boric acid, a phosphoric acid, a peroxotitanium acid, a zirconium acetate, a zirconium nitrate and the like are used. For an element such as boron, phosphorus, titanium, zirconium and the like, since an alumina containing these elements may be useful as a catalyst carrier and the like, procedures such as a removal of these elements by washing and the like is not required depending on the intended use even when an alumina containing these elements is obtained.

For alkaline earth compounds of Mg, Ca, Ba and the like, rare earth compounds of La, Ce and the like, iron group compounds of Fe, Co and Ni, and basic metal compounds of Mn, Zn and the like, hydroxides, oxides, nitrate or acetate are useful, and an alumina having high specific surface area is obtained when these compounds are added.

These metal salts are added as an aqueous solution, but may be added as a solid in a method of the present invention when the amount of water to be added is considerably large.

A concentration of solute components becomes lower by copolymerizing solute components dissolved in part with newly formed aluminas, and the dissolution newly proceeds and finally all of the volume of solute components is dissolved.

Except for metal salts, a prepolymer, a sol product, ultrafine particles, metal oxides or metal hydroxides in the form of ore powder may be used. Specifically, as a silica component, sodium silicate, a silic acid prepolymer in which Na is removed with an ion-exchange resin from sodium silicate, Hisil-255, a white carbon, a silica sol, silica sands, a silica stone and the like may be used.

Since many of alumina compositions obtained by a method according to the present invention are used for a catalyst carrier, a binder and the like, when ceramic powder and the like is mixed prior to a hydrothermal reaction, it is effective to improve the affinity between ceramic powders and an alumina sol or an alumina gel, and mechanical strength of a final product may be increased.

### (3) Formation of solid-liquid-gas three-phase state at preparation

In the present invention, a hydrothermal reaction is carried out in a solid-liquid-gas three-phase state in the reaction vessel. A solid phase is composed of a water-insoluble substance such as an alumina source and a metal oxide in an inorganic compound to be added, and the like.

A liquid phase is composed of water, an acid, a water-soluble metal salt and a water-soluble oxygen-containing organic compound and the like. A gas phase is part of air phase formed by mixing the solid phase with liquid phase and by incorporating air into the mixture.

For this formation of a particulate in a solid-liquid-gas three-phase, wet-state particulates are stirred outside the reaction vessel to prepare air-incorporated particulates, and then this mixture may be filled up into a reaction vessel. Alternatively, a method of forming a particulate in solid-liquid-gas three-phase in the vessel by filling up an alumina source into the reaction vessel first, and adding an acid aqueous solution and the like while stirring may be employed. In this case, since the temperature is increased by heat of hydration and heat of reaction when an aqueous solution of compounds is added to an alumina source, the latter method is preferable for utilizing the heat.

When the uniform wet particulate in a solid-liquid-gas three-phase is formed, ratio of an alumina as solid and a liquid such as water, an acid and the like, that is, an alumina concentration in solid-liquid phase is roughly in the range of 40 to 70 wt%, although the concentration varies depending on a type of the alumina source, properties such as particle diameter and the like, and further on various compounds to be added.

Boundary of the alumina concentration forming a solid-liquid-gas three-phase or a solid-liquid two-phase is not constant according to the added materials, temperature, time, reaction history and the like at mixing. In a high concentration range, a solid-liquid-gas three-phase is formed by naturally incorporating air. In contrast, accurate concentration adjustment is required in low concentration side.

When a solid-liquid-gas three-phase state is formed and then water is slightly added to the three-phase to reduce the alumina concentration, there obtained a limit value of concentration at which the three-phase is changed into sludge state. The limit value varies depending on a particle size distribution of a alumina source. When an added compound is acetic acid, alumina having an average particle diameter of 5 µm forms a solid-liquid-gas three-phase at a concentration of 61 wt% or more, but sludge state is formed at a concentration of less than 61 wt%. In the alumina having an average particle diameter of 50 µm, the concentration limit value is 58 wt%.

When a solid organic compound such as an oxalic acid, a tartaric acid, sucrose and the like, or a solid inorganic compound such as silica fine powders of Hisil-255, cobalt acetate and the like are added, water is fixed because these compounds cause hydration reaction with water. As a result, a lower limit value of alumina concentration forming a solid-liquid-gas three-phase is shifted to lower concentration side as compared with the limit concentration in the case that only acetic acid is added.

In a compound including a polyvalent acid such as an oxalic acid, a tartaric acid, a silic acid, a phosphoric acid and the like; an oxy acid and others, transit time after preparing solid-liquid-gas three-phase particulate is short and rate to change from wet powder state to dry powder state is fast at temperature rising or early period of the reaction.

Water is further added to the dry powders to form a wet powder in a solid-liquid-gas three-phase having a low alumina concentration, and then a second reaction may be carried out by reheating. This method is an effective method of accelerating reaction rate by lowering an alumina concentration and of obtaining a reaction product in a low concentration region. For an alumina concentration at this time, a solid-liquid-gas three-phase was formed down to 46 wt%, although depending on a type of additives or an added amount.

When an added compound is a monobasic acid such as a nitric acid, a hydrochloric acid and the like, or an acetic acid only, wet powder state may be changed to dry powder state during an early period of reaction. For the means for this, the reaction is preferably carried out with rising temperature. Water is further added to the dry powders to lower an alumina concentration, a solid-liquid-gas three-phase was formed even at 49 wt%.

In the present invention, when a wet particulate is filled up in a reaction vessel, it is preferable that a wet particulate is prepared such that a volume ratio of a gas phase portion in a particulate phase may be in the range of 20 to 75 vol%. In this volume ratio, a volume ratio of a solid phase and a liquid phase is calculated from a true density of an alumina source, specific gravity of a liquid, composition of particulate and packing density into the reaction vessel, and the volume ratio of a gas phase is calculated as 100-(volume ratio of a solid phase + volume ratio of a liquid phase).

### (4) Hydrothermal reaction

In the present invention, wet particulate prepared as described above is filled up into a pressure-resistant vessel such as an autoclave and the like, and a hydrothermal reaction is carried out at a predetermined temperature in the range of 70 to 250°C. In a reaction procedure, reaction is basically carried out without stirring but may be carried out with stirring. When a hydrothermal reaction is carried out with stirring, an alumina composition having a large pore diameter is obtained despite of having a small particle diameter.

Although the reactant is heated from outside of the reaction vessel to the predetermined temperature at hydrothermal reaction, under a condition in solid-liquid-gas three-phase according to the present invention, the center part of the reaction vessel is started to raise the temperature thereof at the same time of raising the temperature of the inner wall part of the reaction vessel, and the temperatures of center part and inner wall part reach the predetermined temperature at about the same time. For example, temperature rising behavior was observed when a wet particulate in solid-liquid-gas three-phase having a concentration of 59 wt% was prepared from ρ-alumina having an average particle diameter of 50 µm, and the particulate was filled up into an autoclave and was heated from the outside. As a result, when a temperature of the inner wall part reaches around 70 °C, the center part is started to raise the temperature thereof, and when a temperature of the inner wall part reaches around 90°C, the temperature of the inner wall part is accorded with the temperature of the center part. After that, the temperatures rise almost simultaneously up to 200 °C, and then temperature difference between the inner wall part and the center part do not change at an exothermic reaction in the course of the entire reaction. After filling up into the autoclave, when the heating is carried out under reduced pressure, the temperature rising in the center part starts from further lower temperature and the center part temperature is rapidly close to the inner wall part temperature.

When a conventional source in solid-liquid two-phase state such as a slurry and the like is heated from outside of a reaction vessel to a predetermined reaction temperature in a similar manner, temperatures of a inner wall part and a center part rise keeping some temperature differences between them, and moreover, it takes long time for the temperature of the center part to reach the predetermined temperature. In addition, when a hydrothermal reaction starts, phenomena in which temperature of the center part is slightly higher than that of the inner wall part due to the heat of reaction, and the like are observed.

In the present invention, the reason why the temperature is rapidly raised and the heating is uniformed in the reaction vessel as described above, is considered because a heat transfer based on heat pipe phenomena that is one of the heat exchangers occurs and the rate of heat transfer is increased.

In the present invention, a wet particulate is filled up into a reaction vessel, and, after sealing the vessel, the temperature of the vessel is raised to the predetermined temperature. Although temperature rising is started under normal pressure in this step, after filling up a wet particulate into the vessel and sealing the vessel, it may be started after reducing the pressure in the vessel. When a temperature is raised under reduced pressure in the vessel as above, it has an effect that the rate of heat transfer is increased. Degree of the pressure reduction at this time is preferably in the range of 0.01 to 0.08 MPa. When a hydrothermal reaction is finished and a temperature of the vessel is lowered, the temperature is lowered by evaporating water and free acid in the vessel by opening a flash valve of the vessel. By this process, the reaction product turns into dried and flowable particulate, and the product is easily taken out. Depending on an alumina concentration, particulates are adherent to each other and may form a block. However, the block is crushed easily by using a stirring equipment.

### (5) Washing process

The particulate alumina composition obtained by the method may be used for a catalyst carrier and the like as it is. However, a particulate alumina composition obtained by using an inorganic acid or an organic acid includes these acids, and these acid components may be required to be eliminated in some cases depending on applications. In the present invention, an acid-containing particulate alumina composition is directly brought into contact with an alkaline component such as ammonia and the like in the form of particulate as they are for neutralizing treatment, and then filtration and washing are carried out. By employing this method, filtration rate becomes faster and washing process for acid elimination becomes easier. In addition, a filter cake having a high alumina concentration is obtained.

As an alkaline component, an aqueous solution of ammonia, sodium hydroxide, sodium carbonate and the like is useful. This aqueous solution and a particulate alumina composition are mixed and the mixture is made neutral or weakly basic, and then filtration and washing procedures are carried out. In addition, a particulate alumina composition is filled up into the closed vessel and is neutralized by injecting ammonium gas, and then the product is taken out and filtration and washing procedures may be carried out. A pH of the filter cake after the filtration and washing as described above is preferably in the range of 8 to 11.

### (6) Drying and calcining process

A target alumina is obtained by drying a particulate alumina composition obtained according to the method at 50 to 200°C if necessary, and calcining it at 400 to 700°C depending on applications.

### (Particulate alumina composition)

A particulate alumina composition defined in the present invention means a compound which turns into aluminum oxide by calcining and which turns into a mixture or copolymer of aluminum oxide and alumina containing other inorganic compounds that are added in the production method of the present invention, by calcining.

A particulate alumina composition obtained by a method of the present invention is composed of short fibrous particles having an aspect ratio of 10 or less, preferably 1 to 5, and includes crystalline boehmite. A specific surface area of the particulate alumina composition after the drying thereof at 200°C is in a range of 40 to 300 m²/g.

A particulate alumina composition obtained by a method of the present invention has different properties when dispersed in water, depending on additives added at the reaction.

A particulate alumina composition obtained by adding an inorganic monobasic acid such as a nitric acid, a hydrochloric acid and the like, an aliphatic monocarboxylic acid such as an acetic acid, a formic acid and the like, and monobasic acid salt of zirconium forms an aqueous alumina sol by dispersing the alumina composition into water.

In addition, when a polyvalent carboxylic acid such as an oxalic acid and the like, an oxy acid such as a tartaric acid, a glycolic acid and the like, an inorganic compound other than zirconium compounds are added, a particulate alumina composition does not form an aqueous sol except that the added amount is small.

A particulate alumina composition obtained by a hydrothermal reaction in neutral region by adding water only or basic region by adding ammonia, sodium hydroxide and the like does not form an aqueous sol.

An aqueous sol obtained by dispersing a particulate alumina composition obtained by using a nitric acid into water has high viscosity as compared with the case of using a hydrochloric acid or an aliphatic monocarboxylic acid, and some alumina particles are agglomerated.

When only a monocarboxylic acid or a mixture of a monocarboxylic acid and a monobasic inorganic acid is used, a particulate alumina composition is easily dispersed into water to form an aqueous sol having low viscosity.

Alumina obtained by carrying out a hydrothermal reaction at 135°C by adding ammonia into an aqueous sol that is obtained by dispersing into water a particulate alumina composition obtained by using a nitric acid, drying and calcining increases the pore volume drastically.

Alumina obtained by redrying and calcining an aqueous sol obtained by dispersing into water a particulate alumina composition that is obtained by using a mixture of an aliphatic monocarboxylic acid and an monobasic inorganic acid has a narrow pore size distribution as compared with alumina obtained by directly calcining a particulate alumina composition before dispersing into water.

A particulate alumina composition obtained by adding an oxygen-containing organic compound has a small particle diameter and a high specific surface area. This composition turns into an aqueous gel when dispersed into water, and alumina having a high specific surface area is obtained by calcining at 500 to 600°C after the drying thereof.

When a particulate alumina composition obtained by adding 1 to 2 wt% of metal compounds such as Si, P, Mg, La and the like for alumina based on an oxides is dispersed into water, a sol containing an agglomerated gel substance is obtained. This sol is calcined at 500 to 600°C after the drying thereof to obtain alumina having a high specific surface area.

In addition, a particulate alumina composition obtained by adding a Zr salt of monobasic acid is easily dispersed in water to turn into an aqueous sol with a low viscosity, and alumina obtained after drying and calcining has a small pore volume and a high mechanical strength.

### [Examples]

The present invention is further illustrated below according to examples.

### [Example 1]

220 g of 16.0 wt% of nitric acid aqueous solution was added to 500 g of alumina having an Al₂O₃ concentration of 93.6 wt%, an average particle diameter of 50 µm, and ρ and χ crystalline structure, which was obtained by rapid dehydration of aluminum hydroxide (gibbsite) in thermal air current, to prepare an wet particulate having an Al₂O₃ concentration of 65 wt%, a molar ratio of HNO₃/Al₂O₃ of 0.12 and a molar ratio of H₂O/Al₂O₃ of 2.63.

A packing density of this wet particulate was 0.90 g/ml, and a volume ratio of solid-liquid-gas three-phase was as follows: a solid phase of a alumina source was 21 vol%, a liquid phase of nitric acid aqueous solution was 26 vol% and a gas phase of air was residual 53 vol%.
This wet particulate was filled into an autoclave and the autoclave was heated at 200°C for 10 hours without stirring and reducing the pressure, and then the mixture was cooled. The obtained reaction product was a particulate alumina composition composed of crystalline boehmite having a number average aspect ratio of 5.

Specific surface area of the particulate alumina composition that is a reaction product, after the drying thereof at 200°C, and further specific surface area, and pore volume and the pore structure such as pore diameter distribution and the like between 40 and 1,000Å of pore diameter, of alumina after calcining 550°C for 2 hours, are listed in Table 1.

Then, the pore structure such as pore diameter distribution and the like of the alumina obtained by preparing an aqueous sol having an Al₂O₃ concentration of 40 wt% that was obtained by dispersing the particulate alumina composition of the reaction product into water, and then calcining this aqueous sol at 550°C after the drying thereof, are listed in Table 1.

Moreover, as a result of hydrothermal treatment carried out at 130°C for 3 hours after aqueous ammonia was added to the aqueous sol having a concentration of 40 wt% for neutralizing the residual nitric acid, an aqueous gel was obtained.

Pore structure such as pore diameter distribution and the like of the alumina obtained by calcining this aqueous gel at 550°C for 2 hours after the drying thereof, are listed in Table 1.

**[Table 1]**

| Precursor before measurement | 200°C Specific surface area m²/g | 550°C Specific surface area m²/g | 550°C Pore volume ml/g | 550°C Average pore diameter Å | Shape of pore diameter distribution |
|---|---|---|---|---|---|
| Reaction product | 103 | 160 | 0.31 | 230 | Broad |
| Aqueous sol | - | 164 | 0.54 | 230 | Narrow |
| Hydrothermally treaded aqueous gel | - | 153 | 0.42 | 159 | Narrow |

A pore diameter distribution of the reaction product in Example 1 has broad shape. However, pore diameter distributions of an acidic aqueous sol obtained by dispersing the reaction product into water and an aqueous gel obtained by hydrothermally treating this aqueous sol after the neutralization thereof, have narrow shape.

Specific surface area was measured according to a nitrogen absorption method, and pore volume and average pore size were measured according to a mercury penetration method.

### [Example 2]

An acetic acid aqueous solution was added to 500 g of alumina source used in Example 1 to prepare a wet particulate in a solid-liquid-gas three-phase having an Al₂O₃ concentration of 59 wt% and a molar ratio of CH₃COOH/Al₂O₃ of 0.25.

This wet particulate was filled up into an autoclave and a pressure in the autoclave was reduced to 0.06 MPa by a vacuum pump, and then the temperature was raised up to 180°C and the autoclave was heated for 6 hours without stirring. After the reaction was completed, the temperature in the autoclave was lowered by releasing the vapor from the autoclave, and then the reaction product was taken out from the autoclave, and placed into a dryer to evaporate residual water and acetic acid at 160°C. The obtained product was a dried particulate alumina composition composed of crystalline boehmite having an Al₂O₃ concentration of 79 wt%, a molar ratio of CH₃COOH/Al₂O₃ of about 0.1 and a number average aspect ratio of 4.

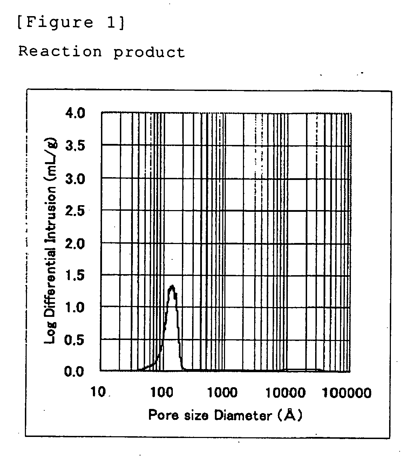

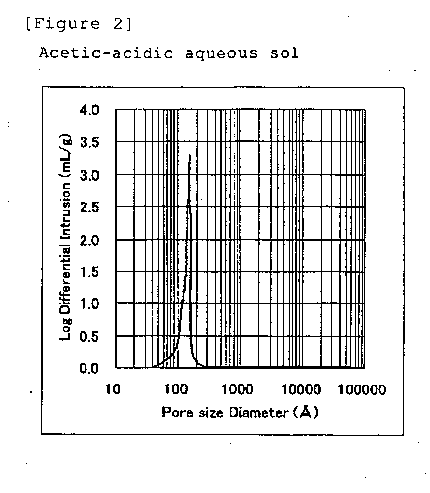

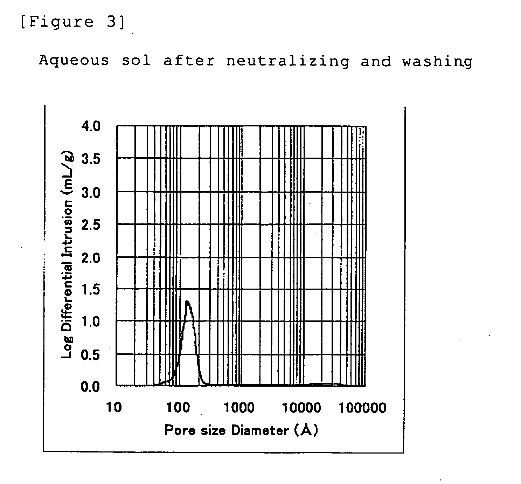

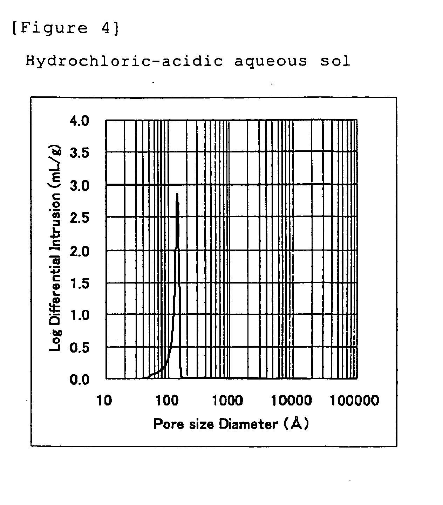

Specific surface area of this particulate alumina composition after the drying thereof at 200°C in a similar way to Example 1, and further specific surface area after calcining at 550°C, pore volume and pore structure such as pore diameter distribution and the like between 40 and 1,000 Å of pore diameter are listed in Table 2 and shown in Figure 1. Next, an aqueous sol having an Al₂O₃ concentration of 15 wt% was prepared by dispersing this particulate alumina composition into water. Pore structure such as pore diameter distribution and the like of alumina obtained by calcining this aqueous sol at 550°C after the drying thereof, was measured in a similar way to Example 1 are listed in Table 2 and shown in Figure 2.
In addition, this particulate alumina composition was filled into a closed vessel and acetic acid was neutralized with ammonia gas, and after the neutralization, a suspension suspended in pure water was washed while spraying pure water by using a reduced-pressure filter equipment. As a result, an aqueous gel having an Al₂O₃ concentration of 50 wt% and an excellent filtration property was obtained. This aqueous gel has a reversible property of turning into an aqueous sol when an acid is added to the aqueous gel and turning into an aqueous gel again when an alkaline is added to the aqueous gel. Pore structure of a dry gel obtained by crushing this aqueous gel after the drying thereof at 120°C was measured in a similar way to Example 1. The results are listed in Table 2 and shown in Figure 3.
In addition, after dispersing powders of the dry gel into water, a small amount of hydrochloric acid was added to obtain a hydrochloric-acidic aqueous sol having an Al₂O₃ concentration of 15 wt% and a molar ratio of HCl/Al₂O₃ of 0.04. Pore structure of this aqueous sol was measured in a similar way to Example 1. The results are listed in Table 2 and shown in Figure 4.

**[Table 2]**

| Precursor before measurement | 200°C Specific surface area m²/g | 550°C Specific surface area m²/g | 550°C Pore volume ml/g | 550°C Average pore diameter Å | Shape of pore diameter distribution |
|---|---|---|---|---|---|
| Reaction product | 112 | 160 | 0.48 | 150 | Broad |
| Acetic-acidic aqueous sol | - | 168 | 0.45 | 140 | Narrow |
| Aqueous sol after neutralizing and washing | - | 153 | 0.42 | 159 | Broad |
| Hydrochloric-acidic aqueous sol | - | 152 | 0.42 | 145 | Narrow |

### [Example 3]

The alumina source used in Example 1 was filled into an autoclave equipped with a stirring equipment, and a wet particulate in a solid-liquid-gas three-phase having an Al₂O₃ concentration of 65 wt% and a molar ratio of CH₃COOH/Al₂O₃ of 0.32 was prepared by spray-adding an acetic acid aqueous solution while stirring.

This wet particulate was filled up into an autoclave, the pressure was reduced to 0.06 MPa by a vacuum pump, and then the autoclave was heated using steam jacket while stirring. The temperature was raised to 162.5°C, and the autoclave was heated under stirring for 36 hours. After the reaction was completed, the temperature in the autoclave was lowered by releasing the vapor from the autoclave. As a result, a particulate alumina composition composed of the crystalline boehmite containing an acetic acid having a number average aspect ratio of 4 was obtained.

This particulate alumina composition was dried at 200°C in a similar way to Example 1 and further calcined at 550°C, and then each pore structure was measured. The results are listed in Table 3. This alumina composition was a dry gel having a reversible property of forming an aqueous sol when dispersing the alumina composition into water.

### [Example 4]

An acetic acid aqueous solution was added while cooling to a mixture of 500 g of the alumina source used similarly in Example 1 and 360 g of gibbsite having an average particle diameter of 0.6µm to prepare a wet particulate in a solid-liquid-gas three-phase having an Al₂O₃ concentration of 62 wt% and a molar ratio of CH₃COOH/Al₂O₃ of 0.25.

This wet particulate was filled up into an autoclave, the pressure was reduced to 0.06 MPa by a vacuum pump, and then the temperature was raised to 200°C and the autoclave was heated for 8 hours without stirring. After the reaction was completed, the temperature in the autoclave was lowered by releasing the vapor from the autoclave. As a result, a particulate alumina composition composed of the crystalline boehmite containing an acetic acid and having a number average aspect ratio of 4 was obtained.

This particulate alumina composition was dried at 200°C in a similar way to Example 1, and further calcined at 550°C, and then each pore structure was measured. The results are listed in Table 3. This alumina composition was also a dry gel having a reversible property of forming an aqueous sol when dispersing the alumina composition into water.

### [Example 5]

An acetic acid aqueous solution was added while cooling to the alumina source used similarly in Example 4 to prepare a wet particulate in a solid-liquid-gas three-phase having an Al₂O₃ concentration of 65 wt% and a molar ratio of CH₃COOH/Al₂O₃ of 0.25.

This wet particulate was filled up into an autoclave, and the temperature was raised to 98°C without reducing pressure, and the autoclave was heated for 3 hours without stirring to obtain a dried particulate alumina composition.

Next, for neutralizing the acetic acid contained in this particulate alumina composition, aqueous ammonia having an NH₃ concentration of 17 wt% was added to the particulate alumina composition. As a result, a wet particulate alumina composition having an Al₂O₃ concentration of 56 wt% was obtained.

The wet particulate alumina composition was filled up into an autoclave, the temperature was raised to 170°C without reducing pressure, and the autoclave was heated for 8 hours without stirring. After the reaction was completed, the temperature in the autoclave was lowered by releasing the vapor from the autoclave. The obtained reaction product was composed of crystalline boehmite having a number average aspect ratio of 3 and was a particulate alumina composition having a non-reversible dry gel property. This reaction product was dried at 200°C in a similar way to Example 1 and further calcined at 550°C, and then each pore structure was measured. The results are listed in Table 3.

### [Example 6]

Pure water was added while cooling to 500 g of alumina having an average diameter of 5 µm and ρ and χ structure obtained by a similar method to Example 1 to prepare a wet particulate in a solid-liquid-gas three-phase having an Al₂O₃ concentration of 62 wt%.

This wet particulate alumina composition was filled up into an autoclave, the temperature was raised to 170°C without reducing pressure, and the autoclave was heated for 6 hours without stirring. After the reaction was completed, the temperature in the autoclave was lowered by releasing the vapor from the autoclave. The obtained reaction product was an agglomerated particulate alumina composition composed of crystalline boehmite having a number average aspect ratio of 3.
This reaction product was dried at 200°C in a similar way to Example 1 and further calcined at 550°C, and then each pore structure was measured. The results are listed in Table 3.

### [Example 7]

100 ml of pure water was added while cooling to 500 g of the alumina source used similarly in Example 1, and then the aqueous ammonia was added to the mixture to prepare a wet particulate in a solid-liquid-gas three-phase having an Al₂O₃ concentration of 62 wt%.

This wet particulate was filled up into an autoclave, the temperature was raised to 170°C without reducing pressure, and the autoclave was heated for 8 hours without stirring. After the reaction was completed, the temperature in the autoclave was lowered by releasing the vapor from the autoclave. The obtained reaction product was an agglomerated particulate alumina composition composed of crystalline boehmite having a number average aspect ratio of 4. This reaction product was dried at 200°C in a similar way to Example 1 and further calcined at 550°C, and then each pore structure was measured. The results are listed in Table 3.

### [Example 8]

A mixed aqueous solution of an acetic acid and an oxalic acid dihydrate was added while cooling to the alumina source used similarly in Example 1 to prepare a wet particulate in a solid-liquid-gas three-phase having an Al₂O₃ concentration of 57 wt%, a molar ratio of CH₃COOH/Al₂O₃ of 0.25 and a weight ratio of oxalic acid dihydrate/alumina of 0.04.

This wet particulate was filled up into an autoclave, the temperature was raised to 160°C without reducing pressure, and the autoclave was heated for 3 hours without stirring, and then cooled to room temperature. Since this product showed dried powdery appearance, water was further added to the product to prepare a wet particulate in a solid-liquid-gas three-phase having an Al₂O₃ concentration of 49 wt%.

This wet particulate was filled up into an autoclave, the pressure was reduced to 0.06 MPa by a vacuum pump, and then the temperature was raised to 160°C and the autoclave was heated for 10 hours without stirring. During this reaction of the 6th hour to the 8th hour, the vapor was gradually released to increase an Al₂O₃ concentration of inner mixture to 57 wt%. After the reaction was completed, the temperature in the autoclave was lowered by releasing the vapor from the autoclave. The obtained product was composed of crystalline boehmite having a number average aspect ratio of 4 and was a particulate alumina composition having a non-reversible dry gel property.

Next, for neutralizing the acetic acid and oxalic acid contained in this particulate alumina composition, aqueous ammonia having an NH₃ concentration of 17 wt% was added to the particulate alumina composition. Water was added to this alumina composition and kneaded to obtain an extrusion molded product having a diameter of 1.6 mm. This extrusion molded product was dried at 200 °C in a similar way to Example 1 and further calcined at 550 °C, and then each pore structure was measured. The results are listed in Table 3.

**[Table 3]**

| Example | Main characteristics of product | 200°C Specific surface area m²/g | 550°C Specific surface area m²/g | 550°C Pore volume ml/g | 550°C Average pore diameter Å |
|---|---|---|---|---|---|
| 3 | Reversible dry gel | 108 | 162 | 0.49 | 196 |
| 4 | Reversible dry gel | 88 | 158 | 0.44 | 200 |
| 5 | Non-reversible dry gel | 127 | 193 | 0.40 | 118 |
| 6 | agglomerated particulate | 77 | 164 | 0.33 | 147 |
| 7 | agglomerated particulate | 101 | 169 | 0.29 | 226 |
| 8 | Non-reversible dry gel | 260 | 272 | 0.48 | 83 |

### [Example 9]

An acetic acid aqueous solution was added to 90 kg of the alumina source used in Example 1 to prepare a wet particulate in a solid-liquid-gas three-phase having an Al₂O₃ concentration of 62 wt% and a molar ratio of CH₃COOH/Al₂O₃ of 0.25. 136 kg of this wet particulate was filled up into a non-stirring type autoclave with a steam jacket having an inner diameter of 700 mm and an inner volume of 200 L, and the autoclave was heated by supplying steam to the steam jacket without reducing pressure. Temperature rising rate was 0.9°C/min when the temperature of center part reached about 100°C.
Next, the same amount of the same wet particulate was filled up in the same autoclave and the pressure was reduced to 0.06 MPa with a vacuum pump. The autoclave was heated in a similar way by supplying steam to the steam jacket. As a result, temperature rising rate was 2.1°C/min when the temperature of center part reached about 100°C.

By this result, it was showed that temperature rising rate became double or more by reducing the pressure to 0.06 MPa.

### [Examples 10 to 20]

An acetic acid aqueous solution was added to the alumina source used similarly in Example 1 so that a molar ratio of CH₃COOH/Al₂O₃ is 0.25, and various inorganic compounds were added to the mixture to prepare a wet particulate in a solid-liquid-gas three-phase having an Al₂O₃ concentration of 59 to 60 wt%. The wet particulate was filled up in an autoclave to carry out a hydrothermal reaction without reducing pressure.

Names of additives, compositions, alumina concentrations and reaction conditions are shown as Table 4, and results of pore structure of the obtained particulate alumina compositions in a similar way in Example 1 were listed in Table 4.

**[Table 4]**

| Example No. | Additives | Composition (Wt/Wt) | Concentration Wt.% | Reaction conditions °C-h | 200°C Specific surface area m²/g | 550°C Specific surface are m^{2/}g | 550°C pore diameter Å |
|---|---|---|---|---|---|---|---|
| 10 | Hisil-255 | SiO₂/Al₂O₃ = 1/99 | 59 | 170-6 | 162 | 210 | 110 |
| 11 | Silica stone powder | SiO₂/Al₂O₃ = 1/99 | 59 | 170-10 | 123 | 177 | 135 |
| 12 | Ion-exchanged silic acid | SiO₂/Al₂O₃ = 1/99 | 59 | 170-8 | 197 | 237 | 65 |
| 13 | Neutralizing water glass with acetic acid | SiO₂/Al₂O₃ = 1/99 | 59 | 170-8 | - | 226 | 60 |
| 14 | Phosphoric acid | P₂O₅/Al₂O₃ = 1/99 | 59 | 170-8 | 252 | 255 | 75 |
| 15 | Phosphoric acid | P₂O₅/Al₂O₃ = 2/98 | 59 | 170-8 | 272 | 291 | 50 |
| 16 | Magnesium oxide | MgO/Al₂O₃ = 2/98 | 59 | 170-6 | 194 | 263 | 85 |
| 17 | Lanthanum acetate | La₂O₃/Al₂O₃ = 2/98 | 59 | 170-6 | 167 | 228 | 105 |
| 18 | Zinc acetate | ZnO/Al₂O₃ = 2/98 | 60 | 170-6 | 182 | 176 | 105 |
| 19 | Manganese nitrate | MnO₂/Al₂O₃ = 2/98 | 60 | 170-6 | 161 | 204 | 110 |
| 20 | Cobalt acetate | CoO/Al₂O₃ = 2/98 | 60 | 170-6 | 194 | 239 | 90 |

### [Comparative example 1]

An acetic acid aqueous solution was added while cooling to the alumina source used similarly in Example 4 to try to prepare a wet particulate in a solid-liquid-gas three-phase having an Al₂O₃ concentration of 56 wt% and a molar ratio of CH₃COOH/Al₂O₃ of 0.25. However, at the final stage of adding an acetic acid aqueous solution, the mixture turned into a clay-like sludge in a solid-liquid two-phase. Although this sludge is difficult to handle, the sludge was filled up into an autoclave, the temperature was raised to 170°C and the autoclave was heated for 8 hours without stirring, and then the temperature in the autoclave was lowered by releasing the vapor from the autoclave. The obtained reaction product was a consolidated block and extremely difficult to handle.

### [Comparative example 2]

An acetic acid containing particulate alumina composition composed of crystalline boehmite having an Al₂O₃ concentration of 79 wt%, a molar ratio of CH₃COOH/Al₂O₃ of about 0.1, and having a number average aspect ratio of 4 obtained in Example 2 was dispersed into water while stirring to obtain a low viscosity aqueous alumina sol having an Al₂O₃ concentration of 5 wt%. 17 wt% aqueous ammonia solution was added to this sol to become basic, and as a result, this sol turned into a high-viscosity aqueous alumina gel.

When suction filtration was carried out to this aqueous alumina gel using a filter under reduced pressure, it took a long period of time. Although washing was continuously carried out by spraying pure water, it was insufficient. An Al₂O₃ concentration of the obtained cake was a low concentration of 23 wt%.

## Claims

1. A method for producing a particulate alumina composition, comprising:
preparing a wet particulate in a solid-liquid-gas three-phase by adding water and/or one or more compounds selected from an inorganic compound and an oxygen-containing organic compound to one or more alumina sources selected from an alumina hydrate and an alumina being rehydratable in the temperature range of 70 to 250°C; and
carrying out a hydrothermal reaction in the temperature range of 70 to 250°C.

2. The method for producing a particulate alumina composition according to claim 1, wherein the inorganic compound is a monobasic acid and the oxygen-containing organic compound is an aliphatic monocarboxylic acid.

3. The method for producing a particulate alumina composition according to claim 1 or 2, wherein the hydrothermal reaction is carried out under reduced pressure.

4. The method for producing a particulate alumina composition according to any of claims 1 to 3, wherein filtration and washing is carried out after the particulate alumina composition is preliminarily brought into contact with an alkaline component while maintaining the particulate alumina composition in the form of particulate.

5. A particulate alumina composition produced by the method according to any of claims 1 to 4.

6. The particulate alumina composition according to claim 5, wherein the alumina composition contains crystalline boehmite and has a specific surface area in a range of 40 to 300 m²/g when dried at 200°C.
